# FASCICULE DE BREVET EUROPEEN

(11) **EP 1 842 087 B1**
(45) Date de publication et mention de la délivrance du brevet: **22.12.2010**
(21) Numéro de dépôt: 06709166.0
(22) Date de dépôt: 25.01.2006
(51) Int. Cl.: G02B 1/04, B29D 11/00, G02C 7/04

(54) **METHODE DE COLORATION D'UNE LENTILLE OPTIQUE COMPRENANT UN PRIMAIRE D'IMPRESSION, ET LENTILLE OPTIQUE TEINTEE COMPRENANT UN TEL PRIMAIRE D'IMPRESSION**
VERFAHREN ZUM FÄRBEN EINER OPTISCHEN LINSE MIT EINEM DRUCKPRIMER UND OPTISCHE FARBLINSE MIT EINEM DERARTIGEN DRUCKPRIMER
METHOD FOR COLOURING AN OPTICAL LENS COMPRISING A PRINTING PRIMER, AND OPTICAL COLOURED LENS COMPRISING SUCH A PRINTING PRIMER

(30) Priorité: 25.01.2005 FR 0500768
(43) Date de publication de la demande: 10.10.2007
(73) Titulaire: ESSILOR INTERNATIONAL (Compagnie Générale d'Optique), 94220 Charenton le Pont (FR)
(72) Inventeur: BURGUIERE, Carine, Essilor International, 94220 Charenton le Pont (FR); TARDIEU, Pascal, Essilor International, 94220 Charenton le Pont (FR)
(74) Mandataire: Cabinet Plasseraud
(86) Numéro de dépôt international: PCT/FR2006/000167
(87) Numéro de publication internationale: WO 2006/079715

(56) Documents cités:
- US-A1- 2002 071 091
- US-A1- 2002 138 921
- US-A1- 2002 159 160
- US-A1- 2003 184 710

## Description

L'invention a pour objet une méthode de coloration d'une lentille optique comprenant un primaire d'impression transparent, colorable par impression jet d'encre. Cette méthode de coloration met en oeuvre un procédé d'impression jet d'encre dudit primaire d'impression transparent en vue d'obtenir une lentille optique teintée (ou colorée), et cela de façon indépendante de la nature chimique des composés constitutifs du substrat de ladite lentille.

Un autre objet de l'invention est une lentille optique teintée (ou colorée) comprenant ledit primaire d'impression. La lentille teintée est obtenue par coloration à l'aide d'une imprimante jet d'encre dudit primaire d'impression. De telles lentilles teintées sont utiles notamment en ophtalmologie pour des raisons cosmétiques ou médicales, ou encore en photographie.

Conventionnellement, les lentilles optiques teintées (ou colorées) sont préparées en immergeant le substrat dans un bain thermostaté contenant un liquide colorant, de manière à obtenir un substrat teinté (ou coloré). Cette méthode présente des inconvénients en terme de reproductibilité industrielle, et éventuellement en terme d'homogénéité de la couleur de la lentille teintée. De plus les caractéristiques des bains de coloration et de température de bain sont spécifiques de la nature chimique du substrat de la lentille à colorer, nécessitant de disposer de plusieurs formulations et conditions de procédé.

Des méthodes d'impression de lentilles à l'aide d'une imprimante jet d'encre ont ensuite été développées afin notamment d'éliminer cette contrainte de dépendance vis-à-vis de la nature chimique de l'objet à teinter.

JP 2000-314088 (équivalent à JP3349116) décrit un procédé de coloration de lentilles, dans lequel on applique sur le substrat une solution de polymère soluble dans l'eau durcissable à la chaleur, et on chauffe pour obtenir une couche de polymère durcie, puis on applique sur cette couche, par exemple au moyen d'une imprimante à jet d'encre, une solution colorante ; on chauffe à nouveau ; on observe alors que la couleur déposée sur la couche de polymère durcie passe à l'intérieur du substrat ; puis on rince la lentille, ce qui élimine la couche de polymère soluble dans l'eau durcie et la teinture résiduelle, pour obtenir un substrat coloré.

Toutefois, cette méthode est dépendante de la nature chimique du substrat sur lequel est déposé le primaire d'impression et notamment les conditions de température de l'étape de sublimation doivent être spécifiquement adaptés afin d'obtenir une coloration homogène et de bonne aspect cosmétique.

JP 2000-3349116 décrit une méthode d'impression d'une lentille à l'aide d'une imprimante à jet d'encre. La difficulté dans ce cas est de fixer l'encré sur la lentille. Pour résoudre ce problème, ce document envisage de colorer avec une encre un film polymérique qui sera ensuite apposé sur le substrat. L'encre est sélectionnée pour sa compatibilité avec le substrat, et est de préférence additionnée d'une résine soluble dans l'encre pour mieux se fixer au substrat. Toutefois, cette méthode laisse un problème résiduel de faible diffusion de l'encre. En effet, si l'encre ne diffuse pas bien dans le substrat, l'aspect final de la lentille n'est pas homogène.

La littérature brevet concernant la mise au point de primaire d'impression est abondante. Ces primaires d'impression sont principalement utilisés pour l'impression de supports tels que papier et textile. Certains documents (US 6,695,447 ; US 20040048073 ; US 20040059045 ; EP 1 288 012 ; US 6,319,591) citent au sein de leur description l'utilisation de tel primaire d'impression sur des substrat transparents plastiques, mais les plastiques considérés sont toujours des films ayant une épaisseur inférieure à 500 µm. Ces films trouvent une utilisation notamment dans les outils de présentation (diaporama) ou d'emballage.

D'autres documents concernent l'utilisation de ces primaires sur des supports plastiques tels que les DVD et les CD. Dans ce dernier cas la notion de transparence du substrat et du primaire d'impression, et donc de l'objet final teinté, n'est pas intégrée à la problématique.

Aucun document ne mentionne une méthode de coloration mettant en oeuvre un primaire d'impression transparent, colorable par impression jet d'encre, pour une application sur des substrats plastiques transparents composant les lentilles optiques et plus spécifiquement les lentilles ophtalmiques. Plus spécifiquement aucun document ne décrit une telle méthode de coloration compatible avec toute nature chimique du substrat constitutif de la lentille optique.

Le problème objectif de l'invention est donc d'obtenir un primaire d'impression qui soit à la fois stable, transparent, apte à être coloré avec une encre après son dépôt sur un substrat de lentille optique, et compatible avec toute nature chimique dudit substrat. Enfin, la lentille optique teintée obtenue par revêtement de son substrat constitutif par ledit primaire d'impression doit être optiquement transparente et répondre notamment aux critères cosmétiques établis pour les lentilles ophtalmiques.

La solution apportée par la Demanderesse est une méthode de coloration mettant en oeuvre un primaire d'impression comprenant comme matériau de base, en tant que liant du primaire d'impression, une dispersion aqueuse de polymère ; la réceptivité aux encres de ce liant est augmentée, en le combinant à des moyens permettant d'améliorer la diffusion des encres dans ladite couche de liant, et/ou à des moyens permettant d'augmenter les propriétés d'absorption des encres dans ladite couche de liant.

L'invention a donc pour objet une méthode de coloration d'une lentille optique comprenant les étapes suivantes :
a) préparation d'un primaire d'impression transparent comprenant :
   - (1) un liant constitué par une dispersion aqueuse de polymère ;
   - (2) un agent augmentant la diffusion d'encre(s) dans la dispersion aqueuse de polymère, ledit agent comprenant un colloïde ; et/ou
   - (3) un agent augmentant l'absorption d'encre(s) dans la dispersion aqueuse de polymère, ledit agent comprenant un polymère absorbant ;
b) dépôt du primaire d'impression transparent sur au moins une des faces du substrat de la lentille optique, ladite face étant plane, convexe ou concave, et formation dudit film ;
c) séchage du primaire d'impression ;
d) impression, à l'aide d'une imprimante jet d'encre, du primaire d'impression recouvrant le substrat; et
e) séchage de l'encre.

L'invention a également pour objet une lentille optique teintée munie d'un tel primaire d'impression teinté, obtenue selon la méthode de coloration.

Au sens de la présente invention :
- par lentille optique, on entend notamment les lentilles ophtalmiques et les lentilles pour instrument d'optiques ;
- par lentille ophtalmique, on entend les lentilles s'adaptant notamment à une monture de lunette, ayant pour fonction de protéger l'oeil et/ou corriger la vue, ces lentilles étant choisis parmi les lentilles afocales, unifocales, bifocales, trifocales et progressives ;
- par substrat, on entend le matériau transparent constitutif de base de la lentille optique et plus particulièrement de la lentille ophtalmique. Ce matériau sert de support à l'empilement d'un ou plusieurs revêtements et notamment le primaire d'impression ;
- par revêtement, on entend toute couche ou film pouvant être en contact avec le substrat, et/ou avec un autre revêtement, et pouvant notamment être choisi parmi un revêtement anti-reflets, antisalissures, anti-chocs, anti-rayures et polarisant ;
- par "teinté" (ou coloré), on entend de l'objet portant ce qualificatif, qu'il présente un taux de transmission compris entre 8% et 90% (classe 4 à classe 0 respectivement), ce taux de transmission pouvant être uniforme sur l'ensemble de la lentille (lentille teintée), ou non uniforme (lentille à gradient de teinte ou lentille comportant une représentation graphique telle que dessin, motif, caractère). Une lentille optique teintée peut être teintée sur tout ou partie de sa surface.
- par optiquement transparent et d'une façon générale par transparent dans le cadre de l'invention, on entend de l'objet portant ce qualificatif qu'il ne présente pas de diffusion visible et pas de diffraction visible.

Selon une première variante de l'invention, le primaire d'impression, préparé dans l'étape a) de la méthode de coloration, comprend une dispersion aqueuse d'un polymère et un polymère absorbant. Avantageusement, la quantité de polymère absorbant en poids sec est comprise entre 10% et 98% inclus du poids total de matières sèches constituées par le polymère absorbant et le liant.

Selon une deuxième variante de l'invention, le primaire d'impression, préparé dans l'étape a) de la méthode de coloration, comprend une dispersion aqueuse d'un polymère et un colloïde. Avantageusement, la quantité de colloïde est comprise entre 20% et 70% inclus du poids total de matières sèches constituées par le colloïde et le liant.

Selon une troisième variante de l'invention, le primaire d'impression, préparé dans l'étape a) de la méthode de coloration, comprend une dispersion aqueuse de polymère, un colloïde et un polymère absorbant. Dans ce cas, la quantité de colloïde en poids sec est comprise entre 20% et 40% inclus du poids total de matières sèches, et la quantité de polymère absorbant en poids sec est comprise entre 5% et 40% inclus du poids total de matières sèches, lesdites matières sèches étant constitués par le colloïde, le polymère absorbant et le liant.

Dans le cadre de l'invention, le liant est constitué par une dispersion aqueuse d'un polymère celui-ci pouvant être anionique, cationique ou non ionique, ledit polymère pouvant être choisi parmi la famille des polyuréthanes, poly(meth)acryliques, polyoléfines tels que polybutadiènes, poly(styrène-butadiène), polyesters, poly(vinylpyridines), poly(vinylpyrolidones), poly(acylamides), poly(meth)acrylamides, et poly(vinyl esters) tels que poly(vinylacétate). Avantageusement, selon l'invention, le liant est choisi parmi une dispersion aqueuse de polyuréthane anionique, une dispersion aqueuse de polyuréthane cationique, une dispersion aqueuse d'acrylique anionique, une dispersion aqueuse d'acrylique cationique, une dispersion aqueuse de méthacrylique anionique, une dispersion aqueuse de méthacrylique cationique, une dispersion aqueuse de butadiène anionique, une dispersion aqueuse de butadiène cationique, une dispersion aqueuse de polyester anionique et une dispersion aqueuse de polyester cationique. Préférentiellement la dispersion aqueuse de polymère est choisie parmi une dispersion aqueuse de polyuréthane anionique et une dispersion aqueuse d'acrylique cationique. De telles dispersions aqueuses de polymère sont couramment appelées "latex".

Parmi les dispersions aqueuses de polymère utilisables dans le cadre de l'invention, on peut citer à titre illustratif, les polyuréthanes commercialisés par la société Baxenden tels que les polyuréthanes de la famille des Witcobond™ (comme par exemple le W234), ou les acryliques, tels que le Glascol® commercialisé par la société Ciba.

Le polymère absorbant est choisi parmi les polymères hydrophiles tels que polyvinylalcool, poly(vinylalcool-acétate de vinyle) partiellement hydrolysé, polyvinylpyrrolidone, gélatine, éthers de cellulose, poly(acide acrylique), poly(acrylamide), et poly(alkylène oxyde). Préférentiellement, le polymère absorbant est choisi parmi une polyvinylpyrrolidone et un polyvinylalcool. D'une façon particulièrement avantageuse, le polymère absorbant est un polyvinylalcool.

Le colloïde, quant à lui, est choisi parmi les colloïdes d'oxydes minéraux de diamètre compris entre 1 nm et 100 nm, préférentiellement de diamètre compris entre 5 nm et 30 nm. Selon une variante préférée de l'invention, le colloïde est une silice colloïdale anionique ou une silice colloïdale cationique. Préférentiellement, le colloïde est une silice colloïdale anionique.

Ainsi dans le cadre de la première variante de méthode de coloration d'une lentille optique, le primaire d'impression comprend avantageusement une dispersion aqueuse de polymère, ledit polymère étant choisi parmi un polymère acrylique cationique et un polyuréthane anionique, et un agent absorbant choisi parmi une polyvinylpyrrolidone et un polyvinylalcool.

D'une façon préférentielle dans le cadre de cette première variante, la dispersion aqueuse de polymère représente un polyuréthane anionique, et le polymère absorbant représente un polyvinylalcool. D'une façon particulièrement avantageuse, la quantité de polyvinylalcool est comprise entre 10% et 50% inclus du poids total de matières sèches constituées par le polyvinylalcool et le polyuréthane anionique.

Dans le cadre de la seconde variante de méthode de coloration d'une lentille optique selon l'invention, le primaire d'impression comprend avantageusement une dispersion aqueuse de polymère celui-ci étant un polyuréthane anionique, et le colloïde est choisi parmi une silice colloïdale cationique et une silice colloïdale anionique. D'une façon préférentielle dans le cadre de cette seconde variante, la dispersion aqueuse de polymère représente un polyuréthane anionique, et le colloïde représente une silice colloïdale anionique. D'une façon particulièrement avantageuse, la quantité de colloïde est comprise entre 20% et 70% inclus, préférentiellement entre 40% et 60% inclus, du poids total de matières sèches constitués par le colloïde et la dispersion aqueuse de polymère. La quantité de polymère qui enrobe les particules de silice doit être suffisante pour que, lors du dépôt sur le substrat, le primaire d'impression forme un film.

Dans le cadre de la troisième variante de méthode de coloration d'une lentille optique selon l'invention, le primaire d'impression comprend avantageusement une dispersion aqueuse de polymère celui-ci étant un polyuréthane anionique, le colloïde représente une silice colloïdale anionique, et le polymère absorbant représente une polyvinylpyrrolidone.

Des additifs peuvent être ajoutés dans la composition du primaire d'impression selon l'invention, et notamment des stabilisants lumière, des agents de réticulation, des agents de coalescence, des tensioactifs.

Suivant un mode de réalisation particulier de l'invention, l'épaisseur de la couche de primaire d'impression déposée sur le substrat est comprise entre 0,05 µm et 25 µm inclus, préférentiellement entre 1 µm et 10 µm inclus.

Le substrat de la lentille peut être de tout type. A titre indicatif mais non limitatif, on peut citer comme substrat pouvant être utilisé dans le cadre de l'invention les substrats classiquement utilisés en optique et en ophtalmie. Par exemple, sont adaptés les substrats du type polycarbonate ; polyamide ; polyimides ; polysulfones ; copolymères de polyéthylènetérephtalate et polycarbonate ; polyoléfines, notamment polynorbornènes ; polymères et copolymères de diéthylène glycol bis(allylcarbonate) ; polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide.

Le primaire d'impression selon l'invention conjugue à la fois les propriétés de transparence optique souhaitées, et des propriétés d'aptitude à la coloration par impression jet d'encre sur l'ensemble de la gamme ophtalmique (classe 0 à 4).

De plus, le primaire d'impression selon l'invention présente l'avantage d'être utilisable sur tout type de substrat.

Un autre avantage du primaire d'impression selon l'invention est qu'il permet également la réalisation de représentation graphique (motif, dessin, et/ou caractère) sur la lentille : dans le cadre de la présente invention il est possible d'obtenir, du fait de la compatibilité dudit primaire à la technique de l'impression jet d'encre, des lentilles présentant une teinte uniforme, un gradient de teinte, ou au moins une représentation graphique, ladite impression pouvant être réalisée sur tout ou partie de la surface de ladite lentille.

L'invention a également pour objet l'utilisation d'un primaire d'impression tel que décrit ici, pour former un film imprimable (et donc colorable) à la surface d'un substrat de lentille optique, avec une adhérence satisfaisante pour un usage optique ou ophtalmique.

La méthode de coloration, selon l'invention, peut en outre comprendre une étape a') de traitement de la surface du substrat avant le dépôt du primaire d'impression. Par traitement de surface, on entend un traitement chimique, thermique, corona ou plasma. Un tel traitement peut notamment être utile pour induire une bonne adhésion d'un revêtement (film ou couche) sur un substrat de lentille optique. Le choix d'un traitement par rapport à la nature chimique est bien connu de l'homme du métier.

A l'étape b), le dépôt du primaire d'impression peut être réalisé sur l'une ou l'autre des faces du substrat, ou sur les deux faces du substrat, les faces pouvant être planes, concaves ou convexes. Tous les procédés de dépôt connus pour appliquer une solution sur un substrat, sont adaptés pour l'étape b) du procédé selon l'invention. Le dépôt par "spin-coating" (ou centrifugation) est particulièrement préféré dans le cas où on ne souhaite revêtir qu'une seule face de la lentille optique; le dépôt par "dip" (immersion) peut également être préféré notamment si on souhaite revêtir en même temps les deux faces du substrat, en tout ou partie.

Aux étapes c) et e), le séchage du primaire et de l'encre peut être réalisé selon des conditions standard, connues de l'homme du métier dans des gammes de températures variant de la température ambiante (25°C) à une température pouvant atteindre 150°C, et cela pendant une durée variant de 10 minutes à 2 heures. A titre d'exemple non limitatif, l'étape e) peut consister à faire sécher l'encre pendant une heure à 100°C.

La méthode de coloration d'une lentille optique selon l'invention concerne la coloration d'un primaire d'impression tel que défini précédemment, déposé sur le substrat de ladite lentille optique, au moyen d'une imprimante à jet d'encre. La méthode de coloration telle que décrite dans le cadre de l'invention est compatible avec tous types d'imprimantes jet d'encre(s) classiquement utilisées dans le cadre d'applications bureautiques ou photographiques. L'homme du métier choisira principalement une catégorie d'imprimante jet d'encre en fonction du niveau de résolution de restitutions de l'image qu'il souhaite. Ainsi par exemple, une imprimante jet d'encre(s) à haute résolution, de qualité photographique, sera préférentiellement utilisée dans le cas où on souhaite obtenir une lentille optique teintée comprenant, en guise de coloration, une représentation graphique fine et détaillée, telle que par exemple, une image photographique. Pour la réalisation d'une lentille uniformément teintée ou à gradient de teinte, une imprimante jet d'encre de type bureautique est suffisante pour permettre l'obtention d'un objet répondant au critère de cosmétique optique.

Suivant un mode de réalisation particulier de l'invention, un logiciel d'impression est utilisé à l'étape d) du procédé : tout logiciel adapté pour l'impression de la surface imprimable, de textes, de motifs, de dessins, de photos sont utilisables dans le cadre de l'invention.

L'invention a également pour objet une lentille optique teintée obtenue par la méthode de coloration mettant en oeuvre un primaire d'impression tel que défini précédemment. D'une façon particulièrement avantageuse, la lentille optique est une lentille ophtalmique afocale, unifocale, bifocale, trifocale, ou progressive.

La présente invention se comprendra mieux à la lecture des exemples qui suivent, et qui illustrent de façon non limitative l'objet de l'invention.

### Exemple 1 : Coloration par un gradient de couleur bleue d'une lentille optique

Imprimante jet d'encre Canon i865
Primaire :
   - liant : polyuréthane anionique : 40% W234 (Baxenden)
   - colloïde : silice colloïdale anionique : 60% Ludox TM40 (Aldrich)

La solution de primaire est préparée en mélangeant sous agitation magnétique le W234 avec la silice colloïdale. Après une heure d'agitation, le primaire d'impression obtenu est déposé par spin sur un substrat biplan Orma^{™}. Les conditions de spin sont 500 tours/20 secondes. Le primaire est séché 1h à 100°C à l'étuve. L'épaisseur du primaire est de 3.6 µm. Une fois que le primaire d'impression a été séché, la lentille optique comprenant le primaire d'impression et le substrat peut être imprimé (coloré) avec l'imprimante Canon i865. Le gradient bleu est dessiné à l'aide du logiciel Powerpoint™. La lentille optique est chargée dans le module de chargement de l'imprimante, celle-ci étant reliée à l'ordinateur comprenant le fichier "gradient bleu" sous Powerpoint^{™}. L'impression est réalisée. Lorsque la lentille sort de l'imprimante, elle est immédiatement séchée 1h à 100°C. On obtient une lentille optique avec un gradient de bleu, répondant au critère de cosmétique en terme de transparence optique.

### Exemple 2 : Coloration par une représentation graphique de type photographie d'une lentille optique:

Imprimante jet d'encre Canon i865
Primaire :
   - liant : polyuréthane anionique : 70% W234 (Baxenden)
   - polymère absorbant : polyvinylalcool (masse molaire = 13000-23000 g/mol; taux d'hydrolyse: 87-89%)) : 30% PVOH13 (Aldrich)

Une solution aqueuse de polyvinylalool de concentration 10% en poids est préparée en solubilisant le PVOH13 dans l'eau sous agitation pendant 2 heures à 95°C. La solution de primaire est ensuite préparée en mélangeant sous agitation magnétique le W234 avec la solution aqueuse de PVOH13. Après une heure d'agitation, le primaire est déposé par spin sur un substrat biplan Orma™. Les conditions de spin sont 500 tours/15 secondes. Le primaire est séché 1h à 100°C à l'étuve. L'épaisseur du primaire est de 3.6 µm. la lentille optique comprenant le primaire d'impression et le substrat peut être imprimé (coloré) avec l'imprimante Canon i865. La photographie à imprimer est insérée dans un document Word™. La lentille optique est chargée dans le module de chargement de l'imprimante, celle-ci étant reliée à l'ordinateur comprenant le fichier "photographie" sous Word™. L'impression est réalisée. Lorsque la lentille sort de l'imprimante, elle est immédiatement séchée 1h à 100°C. On obtient une lentille optique teintée par une photographie, répondant au critère de cosmétique en terme de transparence optique.

## Revendications

1. Méthode de coloration d'une lentille optique comprenant les étapes suivantes :
a) préparation d'un primaire d'impression transparent comprenant :
- (1) un liant constitué par une dispersion aqueuse de polymère ;
- (2) un agent augmentant la diffusion d'encre(s) dans la dispersion aqueuse de polymère, ledit agent comprenant un colloïde ; et/ou
- (3) un agent augmentant l'absorption d'encre(s) dans la dispersion aqueuse de polymère, ledit agent comprenant un polymère absorbant ;
b) dépôt du primaire d'impression transparent sur au moins une des faces du substrat de la lentille optique, ladite face étant plane, convexe ou concave, et formation dudit film ;
c) séchage du primaire d'impression ;
d) impression, à l'aide d'une imprimante jet d'encre, du primaire d'impression recouvrant le substrat ; et
e) séchage de l'encre.

2. Méthode de coloration selon la revendication 1, **caractérisé en ce que** l'impression de l'étape d) du primaire d'impression consiste en une impression d'une teinte uniforme, d'un gradient de teinte, ou d'une représentation graphique, au moyen d'une imprimante jet d'encre couplée à un logiciel de traitement de texte, ou de représentation graphique.

3. Méthode de coloration selon l'une quelconque des revendications 1 ou 2, **caractérisée en ce que** le dépôt de l'étape b) du primaire d'impression s'effectue par "spin-coating" (centrifugation) sur une des faces du substrat de la lentille optique.

4. Méthode de coloration selon l'une quelconque des revendications 1 ou 2, **caractérisée en ce que** le dépôt de l'étape b) du primaire d'impression s'effectue par "dip-coating" (immersion) sur les deux faces du substrat de la lentille optique.

5. Méthode de coloration selon l'une quelconque des revendications précédentes, **caractérisée en ce que** les étapes de séchages c) et e) s'effectuent à des températures comprises entre 25°C et 150°C, pendant une durée comprise entre 10 minutes et 2 heures.

6. Méthode de coloration selon l'une quelconque des revendications précédentes, **caractérisée en ce que** le primaire d'impression comprend une dispersion aqueuse de polymère et un polymère absorbant.

7. Méthode de coloration selon l'une quelconque des revendications précédentes, **caractérisée en ce que** le primaire d'impression comprend une dispersion aqueuse de polymère et un colloïde.

8. Méthode de coloration selon l'une quelconque des revendications précédentes, **caractérisée en ce que** la dispersion aqueuse de polymère est choisie parmi une dispersion aqueuse de polyuréthane anionique, de polyuréthane cationique, d'acrylique anionique, d'acrylique cationique, de méthacrylique anionique, et de méthacrylique cationique.

9. Méthode de coloration selon l'une quelconque des revendications 1 à 6, et 8, **caractérisée en ce que** ledit polymère absorbant est choisi parmi polyvinylalcool, poly(vinylalcool-acétate de vinyle) partiellement hydrolysé, polyvinylpyrrolidone, gélatine, éthers de cellulose, poly(acide acrylique), poly(acrylamide), et poly(alkylène oxyde).

10. Méthode de coloration selon la revendication 9, **caractérisée en ce que** le polymère absorbant est choisi parmi une polyvinylpyrrolidone et un polyvinylalcool.

11. Méthode de coloration selon l'une quelconque des revendications 9 ou 10, **caractérisée en ce que** le polymère absorbant est un polyvinylalcool.

12. Méthode de coloration selon l'une quelconque des revendications 1 à 5, 7 et 8, **caractérisée en ce que** le colloïde est choisi parmi les colloïdes d'oxydes minéraux de diamètre compris entre 1 nm et 100 nm.

13. Méthode de coloration selon la revendication 12, **caractérisée en ce que** les colloïdes d'oxydes minéraux présentent un diamètre compris entre 5 nm et 30 nm.

14. Méthode de coloration selon l'une quelconque des revendications 12 ou 13, **caractérisée en ce que** le colloïde est choisi parmi une silice colloïdale anionique et une silice colloïdale cationique.

15. Méthode de coloration selon la revendication 14, **caractérisée en ce que** le colloïde est une silice colloïdale anionique.

16. Méthode de coloration selon l'une quelconque des revendications 1 à 6 et 8, **caractérisée en ce que** la dispersion aqueuse de polymère est choisi parmi un polymère acrylique cationique et un polyuréthane anionique, et l'agent absorbant est choisi parmi une polyvinylpyrrolidone et un polyvinylalcool.

17. Méthode de coloration selon la revendication 16, **caractérisée en ce que** le la dispersion aqueuse de polymère représente un polyuréthane anionique, et le polymère absorbant représente un polyvinylalcool.

18. Méthode de coloration selon l'une quelconque des revendications 1 à 5 et 7 à 8, **caractérisée en ce que** la dispersion aqueuse de polymère représente un polyuréthane anionique, et le colloïde est choisi parmi une silice colloïdale cationique et une silice colloïdale anionique.

19. Méthode de coloration selon la revendication 18, **caractérisée en ce que** la dispersion aqueuse de polymère représente un polyuréthane anionique, et le colloïde représente une silice colloïdale anionique.

20. Méthode de coloration selon l'une quelconque des revendications précédentes, **caractérisée en ce que** la dispersion aqueuse de polymère représente un polyuréthane anionique, le colloïde représente une silice colloïdale anionique, et le polymère absorbant représente une polyvinylpyrrolidone.

21. Méthode de coloration selon la revendication 6, **caractérisée en ce que** la quantité de polymère absorbant en poids sec est comprise entre 10% et 98% inclus du poids total de matières sèches constituées par le polymère absorbant et le polymère de la dispersion aqueuse.

22. Méthode de coloration selon la revendication 21, **caractérisée en ce que** la quantité de polyvinylalcool en poids sec est comprise entre 10% et 50% inclus du poids total de matières sèches constituées par le polyvinylalcool et le polyuréthane anionique.

23. Méthode de coloration selon la revendication 7, **caractérisée en ce que** la quantité de colloïde en poids sec est comprise entre 20% et 70% inclus du poids sec total de matières sèches constituées par le colloïde et le polymère de la dispersion aqueuse.

24. Méthode de coloration selon la revendication 22, **caractérisée en ce que** la quantité de colloïde en poids sec est comprise entre 40% et 60% inclus du poids sec total de matières sèches constituées par le colloïde et le polymère de la dispersion aqueuse.

25. Méthode de coloration selon l'une quelconque des revendications 1 ou 19, **caractérisée en ce que** la quantité de colloïde en poids sec est comprise entre 20% et 40% inclus du poids total de matières sèches, et la quantité de polymère absorbant en poids sec est comprise entre 5% et 40% inclus du poids total de matières sèches, lesdites matières sèches étant constituées par le colloïde, le polymère absorbant et le liant.

26. Lentille optique teintée obtenu selon la méthode de coloration comprenant un primaire d'impression selon l'une quelconque des revendications 1 à 25.

27. Lentille optique selon la revendication 26, dans laquelle le primaire d'impression représente un revêtement d'épaisseur comprise entre 0,05 µm et 25 µm inclus.

28. Lentille optique selon la revendication 26, dans laquelle le primaire d'impression représente un revêtement d'épaisseur comprise entre 1 µm et 10 µm inclus.

29. Lentille optique selon l'une quelconque des revendications 26 à 28, **caractérisée en ce qu'**elle représente une lentille ophtalmique afocale, unifocale, bifocale, trifocale, ou progressive.

## Claims

1. A method for coloring an optical lens, comprising the following steps:
a) preparation of a transparent printing primer comprising:
- (1) a binder consisting of an aqueous dispersion of polymer;
- (2) an agent which enhances the diffusion of ink(s) into the aqueous dispersion of polymer, said agent comprising a colloid; and/or
- (3) an agent which enhances the absorption of ink(s) into the aqueous dispersion of polymer, said agent comprising an absorbent polymer;
b) coating of the transparent printing primer on at least one of the faces of the substrate of the optical lens, said face being flat, convex or concave, and formation of said film;
c) drying the printing primer;
d) printing, by means of an inkjet printer, the printing primer covering the substrate; and
e) drying the ink.

2. The coloring method as claimed in claim 1, **characterized in that** the printing at step d) of the printing primer consists of printing a uniform tint, a gradient tint or a graphic representation using an inkjet printer coupled to software for the processing of text or graphic representation.

3. The coloring method as claimed in any of claims 1 or 2, **characterized in that** the coating at step b) of the printing primer is carried out by spin coating (centrifuging) on one of the faces of the substrate of the optical lens.

4. The coloring method as claimed in any of claims 1 or 2, **characterized in that** the coating of step b) of the printing primer is carried out by dip coating (immersion) on both faces at the substrate of the optical lens.

5. The coloring method as claimed in any of the previous claims, **characterized in that** the drying steps c) and e) are carried out at temperatures of between 25°C and 150°C for a time of between 10 minutes and 2 hours.

6. The coloring method as claimed in any of the previous claims, **characterized in that** the printing primer comprises an aqueous dispersion of a polymer and an absorbent polymer.

7. The coloring method as claimed in any of the previous claims, **characterized in that** the printing primer comprises an aqueous dispersion of a polymer and a colloid.

8. The coloring method as claimed in any of the previous claims, **characterized in that** the aqueous dispersion of a polymer is selected from an aqueous dispersion of anionic polyurethane, of cationic polyurethane, of anionic acrylic, of cationic acrylic, of anionic methacrylic and of cationic methacrylic.

9. The coloring method as claimed in any of the previous claims, **characterized in that** said absorbent polymer is selected from poly(vinyl alcohol), partially hydrolyzed poly(vinyl alcohol/vinyl acetate), polyvinylpyrrolidone, gelatine, cellulose ethers, poly(acrylic acid), poly(acrylamide) and poly(alkylene oxide).

10. The coloring method as claimed in claim 9, **characterized in that** the absorbent polymer is selected from poly(vinylpyrrolidone) and a poly(vinyl alcohol).

11. The coloring method as claimed in any of claims 9 or 10, **characterized in that** the absorbent polymer is a poly(vinyl alcohol).

12. The coloring method as claimed in any of claims 1 to 5, 7 and 8, **characterized in that** the colloid is selected from colloids of inorganic oxides with a diameter between 1 nm and 100 nm.

13. The coloring method as claimed in claim 12, **characterized in that** the colloids of inorganic oxides exhibit a diameter of between 5 nm and 30 nm.

14. The coloring method as claimed in any of claims 12 or 13, **characterized in that** the colloid is selected from anionic colloidal silica and cationic colloidal silica.

15. The coloring method as claimed in claim 14, **characterized in that** the colloid is anionic colloidal silica.

16. The coloring method as claimed in any of claims 1 to 6 and 8, **characterized in that** the aqueous dispersion of polymer is selected from a cationic acrylic polymer and an anionic polyurethane and the absorbent agent is selected from poly(vinylpyrrolidone) and poly(vinyl alcohol).

17. The coloring method as claimed in claim 16, **characterized in that** the aqueous dispersion of polymer is an anionic polyurethane and the absorbent polymer is poly(vinyl alcohol).

18. The coloring method as claimed in any of claims 1 to 5 and 7 to 8, **characterized in that** the aqueous dispersion of a polymer is an anionic polyurethane and the colloid is selected from cationic colloidal silica and anionic colloidal silica.

19. The coloring method as claimed in claim 18, **characterized in that** the aqueous dispersion of polymer is an anionic polyurethane and the colloid is anionic colloidal silica.

20. The coloring method as claimed in any of the preceding claims, **characterized in that** the aqueous dispersion of a polymer is an anionic polyurethane, the colloid is anionic colloidal silica, and the absorbent polymer is poly(vinylpyrrolidone).

21. The coloring method as claimed in claim 6, **characterized in that** the amount of absorbent polymer by dry weight is between 10 % and 98 % inclusive of the total weight of dry matter of the absorbent polymer and the polymer of the aqueous dispersion.

22. The coloring method as claimed in claim 21, **characterized in that** the amount of poly(vinyl alcohol) by dry weight is between 10% and 50% inclusive of the total weight of dry matter of the poly(vinyl alcohol) and the anionic polyurethane.

23. The coloring method as claimed in claim 7, **characterized in that** the amount of colloid by dry weight is between 20 % and 70 % inclusive of the total dry weight of dry matter of the colloid and the polymer of the aqueous dispersion.

24. The coloring method as claimed in claim 22, **characterized in that** the amount of colloid by dry weight is between 40% and 60% inclusive of the total dry weight of dry matter of the colloid and the polymer of the aqueous dispersion.

25. The coloring method as claimed in any of claims 1 or 19, **characterized in that** the amount of colloid by dry weight is between 20 % and 40 % inclusive of the total weight of dry matter and the amount of absorbent polymer by dry weight is between 5% and 40% inclusive of the total weight of dry matter, said dry matter being composed of the colloid, the absorbent polymer and the binder.

26. A tinted optical lens obtained according to the coloring method comprising a printing primer as claimed in any of claims 1 to 25.

27. The optical lens as claimed in claim 26, wherein the printing primer is a coating with a thickness of between 0.05 µm and 25 µm inclusive.

28. The optical lens as claimed in claim 26, wherein the printing primer is a coating with a thickness of between 1 µm and 10 µm inclusive.

29. The optical lens as claimed in any of claims 26 to 28, **characterized in that** it is an afocal, single vision, bifocal, trifocal or progressive ophthalmic lens.

## Patentansprüche

1. Verfahren zum Färben einer optischen Linse, umfassend die folgenden Schritte:
a) Herstellen eines transparenten Druckprimers, umfassend:
- (1) ein Bindemittel, bestehend aus einer wässrigen Polymerdispersion;
- (2) ein Mittel, das die Diffusion von Tinte(n) in der wässrigen Polymerdispersion steigert, wobei das Mittel ein Kolloid umfasst und/oder
- (3) ein Mittel, das die Absorption von Tinte(n) in der wässrigen Polymerdispersion steigert, wobei das Mittel ein absorbierendes Polymer enthält;
b) Ablagern des transparenten Druckprimers auf mindestens einer der Flächen des Substrats der optischen Linse, wobei die Fläche eben, konvex oder konkav ist, und Bilden des Films;
c) Trocknen des Druckprimers;
d) Bedrucken des Druckprimers, der das Substrat bedeckt, mittels eines Tintenstrahldruckers und
e) Trocknen der Tinte.

2. Verfahren zum Färben gemäß Anspruch 1, **dadurch gekennzeichnet, dass** das Bedrucken des Druckprimers in Schritt d) aus dem Drucken eines gleichmäßigen Farbtons, eines Farbgradienten oder einer graphischen Darstellung mittels eines Tintenstrahldruckers, der mit einer Textverarbeitungssoftware oder mit Software für graphische Darstellung gekoppelt ist, besteht.

3. Verfahren zum Färben gemäß einem der Ansprüche 1 oder 2,
**dadurch gekennzeichnet, dass** das Ablagern des Druckprimers aus Schritt b) mittels "Spin-Coating" (Zentrifugation) auf einer der Flächen des Substrats der optischen Linse erfolgt.

4. Verfahren zum Färben gemäß einem der Ansprüche 1 oder 2, **dadurch gekennzeichnet, dass** das Ablagern des Druckprimers in Schritt b) mittels "Dip-Coating" (Eintauchen) auf den beiden Flächen des Substrats der optischen Linse erfolgt.

5. Verfahren zum Färben gemäß einem der vorhergehenden Ansprüche, **dadurch gekennzeichnet, dass** die Trocknungsschritte c) und e) bei Temperaturen zwischen 25°C und 150°C, während einer Dauer von zwischen 10 Minuten und 2 Stunden erfolgen.

6. Verfahren zum Färben gemäß einem der vorhergehenden Ansprüche, **dadurch gekennzeichnet, dass** der Druckprimer eine wässrige Polymerdispersion und ein absorbierendes Polymer umfasst.

7. Verfahren zum Färben gemäß einem der vorhergehenden Ansprüche, **dadurch gekennzeichnet, dass** der Druckprimer eine wässrige Polymerdispersion und ein Kolloid umfasst.

8. Verfahren zum Färben gemäß einem der vorhergehenden Ansprüche, **dadurch gekennzeichnet, dass** die wässrige Polymerdispersion aus einer wässrigen Dispersion von anionischem Polyurethan, von kationischem Polyurethan, von anionischem Acryl, von kationischem Acryl, von anionischem Methacryl und von kationischem Metacryl ausgewählt ist.

9. Verfahren zum Färben gemäß einem der Ansprüche 1 bis 6 und 8, **dadurch gekennzeichnet, dass** das absorbierende Polymer aus Polyvinylalkohol, teilweise hydrolysiertem Polyvinylalkohol-vinylacetat, Polyvinylpyrrolidon, Gelatine, Celluloseethern, Polyacrylsäure, Polyacrylamid und Polyalkylenoxid ausgewählt ist.

10. Verfahren zum Färben gemäß Anspruch 9, **dadurch gekennzeichnet, dass** das absorbierende Polymer aus Polyvinylpyrrolidon und Polyvinylalkohol ausgewählt ist.

11. Verfahren zum Färben gemäß einem der Ansprüche 9 oder 10, **dadurch gekennzeichnet, dass** das absorbierende Polymer ein Polyvinylalkohol ist.

12. Verfahren zum Färben gemäß einem der Ansprüche 1 bis 5, 7 und 8, **dadurch gekennzeichnet, dass** das Kolloid aus Kolloiden mineralischer Oxide mit einem Durchmesser zwischen 1 nm und 100 nm ausgewählt ist.

13. Verfahren zum Färben gemäß Anspruch 12, **dadurch gekennzeichnet, dass** die Kolloide mineralischer Oxide einen Durchmesser zwischen 5 nm und 30 nm aufweisen.

14. Verfahren zum Färben gemäß einem der Ansprüche 12 oder 13, **dadurch gekennzeichnet, dass** das Kolloid aus einem anionischen kolloidalen Siliciumdioxid und einem kationischen kolloidalen Siliciumdioxid ausgewählt ist.

15. Verfahren zum Färben gemäß Anspruch 14, **dadurch gekennzeichnet, dass** das Kolloid ein anionisches kolloidales Siliciumdioxid ist.

16. Verfahren zum Färben gemäß einem der Ansprüche 1 bis 6 und 8, **dadurch gekennzeichnet, dass** die wässrige Polymerdispersion aus einem kationischen Acrylpolymer und einem anionischen Polyurethan ausgewählt ist und das absorbierende Mittel aus einem Polyvinylpyrrolidon und einem Polyvinylalkohol ausgewählt ist.

17. Verfahren zum Färben gemäß Anspruch 16, **dadurch gekennzeichnet, dass** die wässrige Polymerdispersion ein anionisches Polyurethan ist und das absorbierende Polymer einen Polyvinylalkohol ist.

18. Verfahren zum Färben gemäß einem der Ansprüche 1 bis 5 und 7 bis 8, **dadurch gekennzeichnet, dass** die wässrige Polymerdispersion ein anionisches Polyurethan ist und das Kolloid aus einem kationischen kolloidalen Siliciumdioxid und einem anionischen kolloidalen Siliciumdioxid ausgewählt ist.

19. Verfahren zum Färben gemäß Anspruch 18, **dadurch gekennzeichnet, dass** die wässrige Polymerdispersion ein anionisches Polyurethan ist und das Kolloid ein anionisches kolloidales Siliciumdioxid ist.

20. Verfahren zum Färben gemäß einem der vorhergehenden Ansprüche, **dadurch gekennzeichnet, dass** die wässrige Polymerdispersion ein anionisches Polyurethan ist, das Kolloid ein anionisches kolloidales Siliciumdioxid ist und das absorbierende Polymer ein Polyvinylpyrrolidon ist.

21. Verfahren zum Färben gemäß Anspruch 6, **dadurch gekennzeichnet, dass** die Menge an absorbierendem Polymer, bezogen auf das Trockengewicht, zwischen 10% und 98% ist, einschließlich des Gesamtgewichts an Trockensubstanz, die aus dem absorbierenden Polymer und dem Polymer der wässrigen Dispersion besteht.

22. VerFahren zum Färben gemäß Anspruch 21, **dadurch gekennzeichnet, dass** die Trockengewichtmenge an Polyvinylalkohol zwischen 10% und 50% einschließlich, bezogen auf das Trockengesamtgewicht an Polyvinylalkohol und anionischem Polyurethan, beträgt.

23. Verfahren zum Färben gemäß Anspruch 7, **dadurch gekennzeichnet, dass** die Trockengewichtmenge an Kolloid zwischen 20% und 70% einschließlich, bezogen auf das Trockengesamtgewicht an Kolloid und Polymer der wässrigen Dispersion, beträgt.

24. Verfahren zum Färben gemäß Anspruch 22, **dadurch gekennzeichnet, dass** die Trockengewichtmenge an Kolloid zwischen 40% und 60% einschließlich, bezogen auf das gesamte Trockengewichts an Kolloid und Polymer der wässrigen Dispersion, beträgt.

25. Verfahren zum Färben gemäß einem der Ansprüche 1 oder 19, **dadurch gekennzeichnet, dass** die Trockengewichtmenge an Kolloid zwischen 20% und 40% einschließlich, bezogen auf das Trockengesamtgewicht, und die Trockengewichtmenge an absorbierendem Polymer zwischen 5% und 40% einschließlich, bezogen auf das Trockengesamtgewicht, beträgt, wobei die Trockensubstanz aus dem Kolloid, dem absorbierenden Polymer und dem Bindemittel besteht.

26. Optische Farblinse, erhalten gemäß dem Verfahren zum Färben, umfassend einen Druckprimer, gemäß einem der Ansprüche 1 bis 25.

27. Optische Linse gemäß Anspruch 26, wobei der Druckprimer eine Beschichtung mit einer Dicke zwischen 0,05 µm und 25 µm, einschließlich, ist.

28. Optische Linse gemäß Anspruch 26, wobei der Druckprimer eine Beschichtung mit einer Dicke zwischen 1 µm und 10 µm, einschließlich, ist.

29. Optische Linse gemäß einem der Ansprüche 26 bis 28, **dadurch gekennzeichnet, dass** es sich um eine afokale, unifokale, bifokale, trifokale oder progressive ophthalmische Linse handelt.
